# EUROPÄISCHE PATENTSCHRIFT

(11) **EP 3 840 570 B1**
(45) Veröffentlichungstag und Bekanntmachung des Hinweises auf die Patenterteilung: **17.08.2022**
(21) Anmeldenummer: 20706616.8
(22) Anmeldetag: 17.01.2020
(51) Int. Cl.: A01L 7/02, A01L 5/00

(54) **HUFSCHUH ODER HUFSCHUHEINLAGE ZUR DRUCKDÄMPFENDEN ABSTÜTZUNG DER ZEHE EINES HUFTIERES**
HOOF SHOE OR HOOF SHOE PAD FOR CUSHIONING SUPPORT OF THE TOE OF A HOOFED ANIMAL
BOTTE DE SABOT OU INSERT DE BOTTE DE SABOT POUR SUPPORTER, AVEC AMORTISSEMENT DE PRESSION, LE DOIGT D'UN ANIMAL ONGULÉ

(30) Priorität: 21.01.2019 DE 202019100308 U
(43) Veröffentlichungstag der Anmeldung: 30.06.2021
(73) Patentinhaber: Prorap GmbH, 65391 Lorch (DE); Andersohn, Stephan, 56357 Gemmerich (DE)
(72) Erfinder: ANDERSOHN, Stephan, 56357 Gemmerich (DE)
(74) Vertreter: Mackert, Andreas
(86) Internationale Anmeldenummer: PCT/DE2020/100033
(87) Internationale Veröffentlichungsnummer: WO 2020/151784

(56) Entgegenhaltungen:
- WO-A1-2014/130593
- WO-A2-2004/064668
- US-A- 4 794 991
- US-B1- 6 192 989

## Beschreibung

Die Erfindung betrifft einen Hufschuh oder eine Hufschuheinlage zur druckdämpfenden Abstützung der Zehe eines Huftieres gemäß dem Oberbegriff von Anspruch 1.

Hufschuhe oder auch Hufeisen dienen hauptsächlich dazu, einer Abnutzung der Hufe bei Pferden und anderen Huftieren entgegenzuwirken. Dies ist besonders bei Tieren erforderlich, die als Nutztiere auf befestigten Wegen und Straßen bewegt werden. Dabei werden traditionell feste, im Falle von Hufeisen auch metallische, Werkstoffe verwendet, die aus der Materialcharakteristik heraus kein oder nur ein sehr geringes Dämpfungsverhalten aufweisen. Schwingungen und Stöße werden so über den Tierhuf direkt in das Skelet des Tieres eingeleitet und führen dort zu Störungen des Bewegungsapparates wie auch der Muskelentwicklung.

Bei Hufschuhen wurde hier bereits versucht, diesem die Nutzzeit der Tiere verkürzenden Effekt durch die Verwendung von verschiedenen Gummikonstruktionen entgegenzuwirken. Da diese Möglichkeiten beschränkt sind wurden im Stand der Technik verschiedene Ausführungen und Konstruktionen derartiger Sohlen entwickelt auf die im Folgenden näher eingegangen wird. Diese Lösungen sind weitestgehend von den Materialeigenschaften der verwendeten Gummimischungen abhängig.

Zudem sind unterschiedliche Einlagen für Hufschuhe bekannt. Dies sind oftmals ebenfalls einfache Gummimatten in weicheren Mischungen oder Schäume auf Basis von EVA oder XPS. Diese zeigen zwar kurzzeitig einen erwünschten Stütz- und Dämpfeffekt, werden aber nach kurzer Zeit durch die hohen Druckkräfte unterhalb der Hufe dauerhaft komprimiert und verlieren so die erforderlichen Eigenschaften.

Aus der Veröffentlichung US 4,981,010 A ist ein Hufschuh für Pferde bekannt, der den Pferdehuf vollständig sockenartig umschließt und an der Fessel durch eine Art Gürtelschnalle befestigt ist. Hierbei ist für die Herstellung dieses Hufschuhs vorgesehen, in mehreren Schritten einen Abdruck vom Pferdehuf zu nehmen, hieraus eine Gussform herzustellen, um ein Gipsmodell des Pferdehufs herzustellen, über das mit oder ohne Sohle ein textiler sockenartiger Hufschuh gezogen und wiederum mit Polyurethan beschichtet wird, wodurch der eigentliche Hufschuh hergestellt ist.

Neben der aufwendigen Herstellung ist zudem nachteilig, dass der Pferdehuf von der derart hergestellten Sohle zwar passgenau aber auch vollumfänglich umschlossen ist, wodurch sowohl die an der Hufrückseite sensiblen Bereiche des Pferdehufs als auch die vordere Strecksehne durch das Umspannen mit dem Hufschuh belastet werden. Zudem ist nicht erkennbar, wie dieser Hufschuh individuell die Probleme des Pferdehufes durch eine Anpassung der Sohle löst und dies auch insbesondere zuverlässig über einen längeren Zeitraum bewerkstelligt. Es ist davon auszugehen, dass beispielsweise eine zusätzlich eingesetzte Sohle durch das Eigengewicht des Pferdes in kürzerer Zeit verformt und komprimiert wird und somit die hufstützende Funktion nicht aufrecht erhalten werden kann.

Aus der Druckschrift AU 2001285835 B2 ist eine Hufschuhvorrichtung bekannt, die eine innovative Zwischenschicht aus einem porösen Schaummaterial offenbart, um einen den Pferdehuf anhebenden Hufschuh mit dem Pferdehuf zu verbinden. Das Schaummaterial fungiert hierbei als Kleber zwischen dem harten Hufschuh und dem zu stützenden Pferdehuf.

Es ist hierbei nicht gelöst, wie eine den Pferdehuf unterstützende dämpfende Wirkung durch diese Vorrichtung sinnvoll erzielt werden kann, da es sich bei dem Schaummaterial lediglich um eine Zwischenschicht auf einem festen Körper handelt, der den eigentlichen Hufschuh bildet. Zudem ist nachteilig, dass hier dieser Hufschuh permanent am Pferdehuf befestigt ist. Es ist zudem zu erwarten, dass hier die Befestigungsschicht durch die Gewichtsbelastung zeitnah komprimiert und ihrer Dämpfungswirkung beraubt ist.

Aus der Druckschrift WO 2004/064668 A3 ist ein Hufschuh bekannt, der über eine Einlegesohle verfügt. Diese wird in einen Hufschuh eingelegt, der sich vollständig dem Pferdehuf anformend ausgebildet ist. Hierbei sind sowohl im hinteren Bereich des Hufes als auch am vorderen Bereich des Hufes angreifende Befestigungsbänder vorgesehen, die den Hufschuh am Pferdehuf befestigen.

Insbesondere der rückwärtig angreifende Abschnitt dieser Befestigungsbänder wird als sehr problematisch angesehen, da dies zu starken Belastungen der Fesselbeuge und der Beugesehne des Pferdefußes führen würde. Der Schuh ist hierbei aus einer Außensohle aufgebaut, die profiliert ausgebildet ist. Zudem ist hier nicht sichergestellt, dass eine ausreichende Dämpfungswirkung und auch eine Rückstellung dieser Dämpfungswirkung durch den Hufschuh und entsprechende Einlagen erreicht wird.

Die Offenlegungsschrift DE 10 2016 223 592 A1 zeigt einen Hufschuh für ein Pferd, die aus einer speziellen Kautschukmischung besteht. Hier ist die Offenbarung primär auf die chemische Zusammensetzung dieser Kautschukmischung beschränkt. Wobei es hier primär um die Reduzierung um Kohlenwasserstoff in dieser Kautschukmischung geht. Auch hier ist nicht erkennbar, wie diese Vorrichtung zum einen eine schonende Befestigung am Huf eines Pferdes ermöglicht und zum anderen auch dauerhaft eine dämpfende und somit schonende Wirkung auf den Huf ausüben kann.

Auch die Veröffentlichung EP 2 900 058 B1 zeigt einen Hufschuh, der am Pferdehuf befestigt werden kann. Hierbei ist insbesondere nachteilig, dass hier die Befestigung des Hufschuhs primär über den hinteren Abschnitt des Hufes erfolgt, an dem eine über den gesamten Huf ansteigende Wandung vorgesehen ist, von der aus Verstrebungen zum vorderen Huf verlaufen. Es handelt sich hierbei daher um eine Lösung, die wie bereits ausgeführt am sensiblen hinteren Hufbereich angreift und hier Druck auf die Fesselbeuge und die Beugesehne des Pferdebeines ausübt, was grundsätzlich nachteilig ist. Auch ist hier nicht offenbart, dass eine konstruktive Lösung gefunden ist, die eine dauerhafte Dämpfung des Pferdehufs bewirkt, da lediglich von einem elastischen Element aus elastischem Material gesprochen wird, allerdings keine Offenbarung vorliegt, wie dieses elastische Material ausgebildet sein soll, um diese Wirkung zu entfalten.

Die Veröffentlichung US 2007/0039289 A1 beschreibt einen Hufschuh, der eine elastische Schaumeinlage aufweist, wobei mit dieser Vorrichtung eine Medikamentierung des Pferdehufes erfolgen soll über einen in der Hufsohle anliegenden Bereich, der mit einem Medikament getränkt werden kann. Es bleibt aus dieser erfinderischen Herangehensweise offen, wie das Dämpfungsverhalten dieses Hufschuhs konkret bewirkt werden soll. Es geht hierbei bei diesem Hufschuh weniger um eine tatsächliche Abdämpfung bei der Gewichtsbelastung des Pferdehufes als vielmehr um die Frage wie die aufgebrachte Medikamentengabe über das flexible Schaummaterial im Inneren des Hufes aufgebracht werden kann.

Aus der Veröffentlichung AT 010 503 U1 ist eine Schutzvorrichtung für eine Klaue offenbart die bei Rindern zum Einsatz kommen soll. Hierbei ist die Schutzvorrichtung aus einem Elastomer geformt und weist eine Sohle auf, die mittels eines Schaftes an der Klaue befestigt wird. Hierbei ist eine offenporige elastische Einlegesohle offenbart, um die Belüftung aus dem Schaft zu bewirken, wofür eine eigenständige Belüftungsleitung zu dieser porösen Einlegesohle hin verläuft. Auch hier ist die Intention der Vorrichtung nicht die optimale Dämpfung des Gewichtes eines Tieres sondern hier liegt der Fokus auf dem Schutz der Klaue bei einer gesteuerten Belüftung eines solchen Schutzschuhs.

Aus der Veröffentlichung WO 2010/053379 ist ein Hufschuh bekannt, der aus Ethylenvinylacetat (EVA) bestehen soll. Dessen Eigenschaften liegen vor allen Dingen in der Temperaturbeständigkeit und der Langlebigkeit und in einer etwa gummiähnlichen Eigenschaft. Hieraus resultiert, dass Dämpfungseigenschaften keine Rolle spielen. Daher ist auch eine Rückstellkraft bei dieser Materialkomponente nicht gegeben, da der offenzellige Schaum lediglich als Lastverteiler fungiert. Zudem bleibt völlig offen, wie diese dämpfende Materialschicht an einem Pferdehuf beziehungsweise an einer Klaue eines Tieres zu befestigen ist. Es ist kein Hufschuh gezeigt, weshalb davon auszugehen ist, dass diese Vorrichtung direkt am Huf oder an der Klaue eines Tieres beispielsweise verklebt wird.

Die Druckschrift US 4,212,356 offenbart ein den Pferdehuf vollständig umschließenden Hufschuh, der im Mittelbereich des Hufes einen gepolsterten Bereich aufweist. Diese Dämpfungseinlage hat eine Art Polsterungseffekt beim Tragen des Hufschuhs, wobei der Hufschuh selbst keine Dämpfung des Pferdegewichtes in Bezug auf den Druck am Pferdehuf aufweist, da der Hufschuh selbst starr ausgebildet ist. Eine separate zusätzliche Einlage ist nicht vorgesehen. Zudem weist auch diese Lösung eine problematische Gestaltung auf, da der Huf vollständig umschlossen ist und insbesondere im hinteren sensiblen Bereich des Pferdehufes Druck auf den Ballenbereich und die Beugesehne ausgeübt wird.

Aus der Veröffentlichung US 6,651,410 B2 ist ein Hufschuh bekannt, der Einlagen aufweisen kann, wobei auch hier der Hufschuh an sich den Huf vollständig umschließend ausgebildet ist. Es sind eine Vielzahl von möglichen Einlagen in den Hufschuh vorgesehen, die beispielsweise auch federgelagert ausgebildet sein können. Grundsätzlich soll so erreicht werden, dass eine flexible Anordnung verschiedener Einlagen in diesem Hufschuh möglich sein soll. Allerdings ist auch hier nicht offenbart, wie zum einen die Dämpfung durch ein geeignetes den das Gewicht des Tieres dämpfendes Material mit ebenfalls geeigneten Rückstellkräften erreicht werden kann. Zudem bleibt unberücksichtigt, wie eine schonende Befestigung dieses Hufschuhs am Pferdehuf durch eine möglichst geringe Belastung mit Befestigungsbereichen erreicht werden kann.

Die Veröffentlichung US 4,564,071 zeigt eine aufwendige Konstruktion eines Hufschuhs, der über mechanische Befestigungselemente am Huf verspannt wird, was grundsätzlich problematisch ist. Zur Schonung des Hufs kann zusätzlich eine Socke als Überzug über den Huf in diesen Schuh eingesetzt werden, wobei diese zusätzlich eingesetzte Socke Druck absorbieren soll. Auch ist die erfinderische Idee darauf gerichtet, durch die Socke für unterschiedlich große Pferdehufe zu nutzen, das heißt, ein einheitlicher Hufschuh kann über den Grö-ßenausgleich der Socke an verschieden große Hufe angebracht werden. Die zuvor genannten Nachteile in Bezug auf die Anordnung am Pferdehuf sind auch hier gegeben. Zudem bleibt auch hier offen, wie die dämpfende Wirkung durch die eingesetzte Socke in den Hufschuh erreicht wird.

Die Druckschriften WO 2014/130593 A1 und US 4, 794, 991 A offenbaren einen Hufschuh oder eine Hufschuheinlage gemäß dem Oberbegriff des Anspruchs 1.

Schließlich offenbart die Veröffentlichung US 2005 007212 ebenfalls einen Hufschuh, der aus einem textilen Hufschuh und einer dämpfenden Einlage in diesen Hufschuh besteht. Diese Einlagen sollen ebenfalls aus elastischem Material gefertigt sein, wobei hier in wie bereits zuvor angeführter Weise der Huf vollständig durch den Hufschuh umschlossen wird, was insbesondere Druck auf die empfindliche Hufrückseite ausübt und auch eine Luftzirkulation am Huf nicht erlaubt. Zudem bleibt auch hier offen, wie eine dämpfende Wirkung konkret durch die Einlage im Hufschuh bewirkt werden soll. Die Offenbarung der Schrift bezieht sich hierbei primär auf die Anbringung am Pferdehuf und betrachtet hierbei weniger, wie eine ideale Schockabsorbtion oder Dämpfungswirkung erreicht werden kann.

Im Ergebnis offenbart der Stand der Technik primär Lösungen, die sich zum einen mit der sicheren und festen Anbringung eines Hufschuhs am Huf eines Tieres beschäftigen. Zum anderen soll eine sichere Umschließung des Hufes zur Vermeidung von Verunreinigungen und zur Schonung des Hufinnenraums gewährleistet sein, wozu auch elastische Einlagen oder Schichten dienen können.

Ein weiterer wünschenswerter Effekt ist die Stützung der Strahls in der Mitte es Hufs. Der Huf an sich ist ein lebendiger Teil der Tiere und wird z.B. bei Pferden stark durchblutet. In einer natürlichen Lebensweise wird der gesamte Huf auf den Boden abgesetzt, auch der mittlere Teil. Diese Teil unterstützt dann bei jeder Bewegung den Bluttransport im Bein. Für mit Hufeisen beschlagene Pferde ergibt sich so häufig ein fataler Kreislauf. Zum einen werden die Hufe durch die Hufeisen gegen übermäßige Abnutzung geschützt, zum Anderen ist aber dadurch die Blutzirkulation nicht optimal. Weiter wird durch das "hochstellen" des Hufs eine Situation erzeugt in der der Strahl unbelastet frei in der Luft steht und Strukturen im Inneren des Hufes überlastet und zerstört werden. Dies kann zu einer Fehllokalisation der Hufknochen führen, die eine Krankheit begünstigen kann, die als Hufrehe bekannt ist. Im Huf kommt es hierbei zu einer Entzündung mit lokalen Durchblutungsstörungen. Diese häufige Erkrankung bereitet den Tieren hochgradige Schmerzen.

Ein hoher Prozentsatz der heute im aktiven Pferdesport genutzten Pferde ist nach einer Zeit von 8 - 10 Jahren nicht mehr einsetzbar. Häufigste Ursache sind unterschiedliche Erkrankungen an den Hufen und Gelenken. Da die Ausbildung dieser Tiere ein wesentlicher Kostenfaktor ist, ist eine Bekämpfung dieser Erkrankungen neben dem primären Ziel des Tierwohles auch wirtschaftlich relevant.

Erkrankungen die hiermit einhergehen sind beispielsweise
- Arthritis,
- Arthrose,
- Gelenkprobleme verschiedenster Art,
- Podotrochlose,
- Lederhautentzündung der Hufe,
- Rückenprobleme beim Pferd oder auch die
- Probleme bei der Umstellung der Hufe von Eisen auf Barhuf.

Das Ziel der vorliegenden Erfindung vor diesem Hintergrund ist es, einen Hufschuh und eine Hufschuheinlage so auszubilden, dass eine verbesserte Dämpfung des Druckes auf den Huf und insbesondere auf den Hufstrahl erreicht wird. Gleichzeitig soll der Hufschuh so am Huf des Tieres befestigt werden, dass eine besondere Schonung des Hufballens wie auch der vorderen Strecksehne erreicht werden kann.

Erreicht wird dies durch einen Hufschuh und eine Hufschuheinlage gemäß den kennzeichnenden Merkmalen des Anspruchs 1.

Die weiteren Ansprüche haben vorteilhafte Bauformen der Erfindung zum Gegenstand.

Die erfinderische Lösung sieht einen Hufschuh oder eine Hufschuheinlage gemäß Anspruch 1 vor, die zumindest ein geschäumtes Kunststoffkissen aufweist zur druckdämpfenden Abstützung angeordnet zwischen dem Fuß eines Huftieres und dem Untergrund. Dieses Kunststoffkissen besteht erfindungsgemäß aus einem geschlossenzellig ausgebildeten Kunststoffschaum, wobei die verwendete Matrix thermoplastisch oder elastomer ausgebildet sein kann und in einem Dichtebereich zwischen 100 und 400 g/l angesiedelt ist. Erfindungsgemäß weist dieses Kunststoffkissen bei 50-prozentiger Kompression eine Druckspannung von 150 bis 280 kPa auf.

Durch diese Merkmalskombination wird erreicht, dass das geschäumte Kunststoffkissen Merkmale in sich vereint, die insbesondere zur Stützung der Hufe eines Tieres vorteilhaft sind. Das elastische geschäumte Kunststoffkissen wird in seinen Randbereichen durch die umlaufende Hufwand stark komprimiert und gleichzeitig auf Grund der geschlossenzellig ausgebildeten Kunststoffmatrix in den Sohlenbereich des Tierhufes gepresst.

Das in die Sohlenwölbung ausweichende Kunststoffkissen erhöht somit im Pferdehuf den dämpfend abstützenden Druck auf die sensiblen Bereiche insbesondere auf den Hufstrahl. Auf diese Weise führt das Kunststoffkissen auf Grund der erfindungsgemäß entstehenden Druckspannung dazu, dass bei Auftreten des Tierhufs auf den Hufschuh oder die Hufschuheinlage eine Materialverlagerung in die Sohlenwölbung erfolgt und somit die Abstützung des Hufballens sowie des Hufstrahls erfindungsgemäß erfolgen kann.

Es hat sich erfindungsgemäß als besonders vorteilhaft erwiesen, für dieses Kunststoffkissen einen geschlossenzelligen Kunststoffschaum in Form eines Partikelschaums mit Perlengrößen zwischen 1,5 und 10 mm zu verwenden. Der derartig beschaffene Partikelschaum aus der bereits zuvor beschriebenen Matrix ist besonders geeignet, den angestrebten Verformungsprozess zu unterstützen und somit die sensiblen Bereiche des Hufballens und des Hufstrahls zu stützen. Somit wird der unmittelbare Druck des Untergrundes auf diese Bereiche des Tierhufes stark gedämpft.

Insbesondere wird das schlagartige Auftreten eines Druckes vermieden, da die Ausbildung des dämpfend abstützenden Drucks auf den Innenhuf durch die Kompression des Kunststoffkissens erst ansteigt bis zur vollen Gewichtsbelastung des auftretenden Tierhufes, um dann nach dessen Entlastung durch die Rückstellung des Kunststoffschaumes wieder abzunehmen. Das heißt, der Effekt liegt zum einen im dämpfend abstützenden Druck an sich und zusätzlich noch in der Form, wie dieser nicht schlagartig sondern progressiv aufgebaut und wieder abgebaut wird.

Weiterhin ist es ein wesentliches Merkmal der verwendeten Kunststoffmatrix und ihrer Kombination von Dichte und Druckspannung, dass eine spontane und somit kurzfristige Rückstellung des Materials aus einer 50-prozentigen Kompression zumindest in einem Bereich von etwa 95 % der Ausgangsdicke gewährleistet ist. Dies ist wesentlich um zu erreichen, dass der gewünschte Effekt aus Verformung und daraus resultierender Dämpfung dauerhaft gewährleistet ist und somit die aus einer Schrittfolge resultierende Wechselwirkung aus Kompression und Dekompression des Hufschuhs beziehungsweise der Hufschuheinlage in einem steten Wechsel immer wieder zum gewünschten Dämpfungs- und Stützungseffekt des Hufes führt.

Unter spontan im Sinne der vorliegenden Erfindung ist in einem regulären Anwendungsfall eine Rückstellung innerhalb von 2 Minuten zu verstehen. Allerdings ist in diesem Zusammenhang auch darauf hinzuweisen, dass es einen gewissen Einfluss der Nutzung gibt. Die Kunststoffkissens sollten idealerweise zum langfristigen Erhalt der positiven Rückstellungseigenschaften in täglichem Wechsel mit einem 2. Satz Kunststoffkissens verwendet werden. Unter dieser Maßgabe ist eine spontane Rückstellung in 2 Minuten gegeben. Sollte ein Anwender über längere Zeit die Sohlen ohne die durch die wechselnde Nutzung erreichte "Zwischenentspannung" verwenden, verhält sich das Material deutlich träger.

Die spezielle Ausbildung der erfindungsgemäßen Hufschuheinlage beziehungsweise des Hufschuhs bewirkt vorteilhafterweise zudem, dass neben der zuvor genannten spontanen Rückstellung eine vollständige Rückstellung in eine dekomprimierte Ausgangshöhe des Kunststoffkissens nach 50-prozentiger Kompression in einem Zeitraum von 30 bis 75 Minuten hergestellt ist. Das heißt, die im Stand der Technik bislang nicht verwirklichte Rückstellung des Kunststoffkissens und somit des Dämpfungseffektes in dessen Ausgangslage ist hier ein wesentlicher Aspekt für die dauerhafte Nutzung des Hufschuhs und der Hufschuheinlage im erfindungsgemäßen Sinne.

Erfindungsgemäß liegt hierbei auch das Elastizitätsmodul bei einer durchschnittlichen Umgebungstemperatur von 20°C bei einem niedrigen Wert von 1 bis 100 MPa, was für die Verformbarkeit und das verformte Eindringen in den inneren Hufbereich förderlich ist. Es hat sich hierbei gezeigt, dass insbesondere ein Wert zwischen 15 und 25 MPa sehr gute Ergebnisse erzielt.

In einer vorteilhaften Ausbildung der Erfindung kann es zudem zur Unterstützung der Wirkung auf den Hufballen und Hufstrahl vorgesehen sein, die Innenfläche des Hufschuhs bzw. der Hufschuheinlage nicht als ebene Oberfläche auszugestalten, sondern hier eine Erhöhung in den Bereichen vorzusehen, die insbesondere eine abstützende Unterstützung erfahren sollen. Das heißt, im und insbesondere hier im Bereich des Hufstrahls kann ein erhöhtes Kissen vorgesehen sein, welches dann noch zusätzlich durch die bei der Kompression erfolgende Verformung im Mittelbereich abstützend wirkt.

Ein positiver Effekt der Verformbarkeit und des Anpassens an den Innenhuf ist zudem, dass der Hufschuh beziehungsweise die Hufschuheinlage gegen eine unbeabsichtigte Rotation am Pferdehuf fixiert wird. Die hohe Elastizität bewirkt, dass der Hufschuh beziehungsweise die Hufschuheinlage bei Kompression stark an den Verlauf der Hufwandung und die Sohlenwölbung des Hufes anpresst und somit eine Rotation am Huf sicher unterbunden wird.

In einer zweckmäßigen Bauform des Hufschuhs bzw. der Hufschuheinlage ist diese der Außenkontur des Pferdehufes nachgebildet, weist aber eine größere Fläche als der Pferdehuf auf, wodurch bei Kompression durch Belastung durch den Pferdehuf die Hufwandungen in das Kunststoffkissen eindringen, wodurch zum einen der beschriebene Effekt der Stützung der Hufsohle des Tierhufes stattfindet, zum anderen aber auch ein die Hufwandung im Außenbereich umschließende Rand ringförmig ausgebildet wird. Auch dies bewirkt einen sicheren Halt des Hufschuhs bzw. der Hufschuheinlage am Huf eines Tieres.

Bei einer besonders vorteilhaften Gestaltung ist vorgesehen, einen die Hufwand zumindest abschnittsweise umschließenden Randbereich am Kunststoffkissen auszubilden. Das heißt, am Kunststoffkissen verläuft in etwa vertikal ein ringförmiger Rand, der die Hufwandung schaftartig umfasst und somit einen grundsätzlichen Halt des Hufschuhs beziehungsweise der Hufschuheinlage am Tierhuf bereits bewirkt.

Hier ist insbesondere in einer vorteilhaften Bauform vorgesehen, dass dieser umlaufende Rand am Hufschuh bzw. der Hufschuheinlage in seiner Neigung bereits der Ausbildung des Tierhufes nachgebildet verläuft. Zusätzlich ist erfindungsgemäß vorgesehen, dass die Neigungen im Verlauf dieses ringförmigen Randes zwischen der vorderen Randausbildung im Bereich der Vorderseite des Tierhufes und im hinteren Bereich des Tierhufes variieren.

Zudem ist vorgesehen, dass sich der aus dem ringförmigen Rand gebildete Schaft am Kunststoffkissen zu seiner oberseitigen Öffnung hin verjüngt. Die Stärke der ringförmigen Wandung ist somit nicht von dem Kunststoffkissen ausgehend zu dessen oberer Öffnung hin konstant sondern es kommt zu einer Aufweitung der Stärke der Wandung zur oberen Öffnung des Schaftes hin, was zusätzlich eine erste Befestigung des Hufschuhs beziehungsweise der Hufschuheinlage am Tierhuf fördert, da der Huf bei einem Aufsetzen des Hufschuhs in diese Aufweitung im unteren Bereich des Schaftes hineingleitet wohingegen der obere Bereich sich enger an den Huf anlegt. Auf Grund der Elastizität des Materials wird so beim Überstülpen des Hufschuhs am Tierhuf bereits eine gute erste Grundstabilität der Befestigung bewirkt.

Zusätzlich ist erfindungsgemäß vorgesehen, dass Befestigungsmittel am Kunststoffkissen des Hufschuhs angeordnet sind, die zur Sicherung am Tierhuf diesen Tierhuf überspannen. Erfindungsgemäß ist hierbei vorgesehen, dass dieses Befestigungsmittel riemenartig vom hinteren Bereich des Hufschuhs ausgehend sich über die Fessel des Tierhufes erstreckt, wodurch erreicht wird, dass der sensible hintere Bereich des Tierhufes nicht von einem Befestigungsmittel komprimiert und somit gereizt wird.

Durch ein Zusammenwirken der Formgebung des Schaftes mit dieser Befestigung kann der hierzu erforderliche konstruktive Aufwand somit aufs geringste reduziert werden, um gerade die Belastung die durch einen geschlossenen Hufschuh am Tierhuf in der Regel stattfindet zu reduzieren. Die Schließung des Befestigungsmittels kann hierbei durch die Elastizität des Befestigungsmittels selbst bewirkt sein, es können aber auch mechanischen Verschlüsse, beispielsweise Schnallen, Klettverschlüssen oder ähnliches Verwendung finden.

Eine besonders vorteilhafte Ausbildung des riemenartigen Befestigungsmittels sieht hierbei vor, dass an der Innenseite Polsterungen am Befestigungsmittel so angeordnet sind, dass im vorderen Bereich des Befestigungsmittels, welches die vordere Fessel des Tierfußes überspannt, keine Druckbelastung am Tierfuß entsteht. D.h., hier wird ein Freiraum mit reduzierter Kompression geschaffen in einem Bereich, in dem die Strecksehne am Tierfuß für die Bewegung des Tierhufs verantwortlich ist.

Gerade diese Strecksehne wird in der Regel durch Hufschuhe, die voll umschließend am Tierhuf befestigt sind belastet, was zu Sehnenreizungen und schmerzhaften Entzündungen beiträgt. Durch die Anordnung der partiellen innenliegenden Polsterung an dem riemenartigen Befestigungsmittel kann genau bestimmt werden, in welchen Bereichen der Druck der Befestigung an dem Tierfuß erfolgt und in welchem Bereich eine Entlastung möglich ist. So können Sehnenreizungen bewusst vermieden werden.

Der Herstellungsprozess der Hufschuheinlagen erlaubt zudem in einer vorteilhaften Weiterbildung der Erfindung die Integration von Sensorelementen. Speziell druckempfindliche Ausführungen dieser Sensoren sind für die Überprüfung von Therapiefortschritten sinnvoll und gut geeignet.

Die durch diese Sensoren erfassten Messwerte ermöglichen eine Auswertung beispielsweise in Form eines 2-dimensionalen Bildes der Druckeinwirkung auf die Hufschuheinlage bzw. den Hufschuh und somit im Umkehrschluss der Belastung des Hufs im Hufschuh. Durch die im Laufe der Therapie angestrebte Verbesserung der Hufsymmetrie und somit der Statik des Bewegungsapparates ergibt sich eine veränderte Krafteinleitung und Druckverteilung auf die Hufschuheinlage bzw. den Hufschuh und somit direkt auf den Huf, die durch diese kontinuierlichen Messungen ermittelt, nachvollzogen und dokumentiert werden kann. Diese Möglichkeit der Kontrolle der Belastung des Hufs soll während des Therapieverlaufs und zur Anpassung des erforderlichen Trainings genutzt werden.

Hierbei ist vorteilhaft, die Daten per ebenfalls integrierter und mit den Sensoren verbundener elektronischer Komponenten zur drahtlosen Kommunikation an ein geeignetes Endgerät z.B. Tablet zu übertragen und weiter zu verarbeiten. Alternativ hierzu kann auch eine elektronische Speicherkomponente, beispielsweise ein Speicher-Chip integriert sein, der eine spätere Auslesung der sensorisch erfassten Messwerte ermöglicht. Dies kann ebenfalls drahtlos oder mittels geeigneter Schnittstellen erfolgen, die an oder in der Hufschuheinlage bzw. dem Hufschuh angeordnet sind.

Zusammenfassend zeichnet sich die erfindungsgemäße Einlage für einen Hufschuh bzw. der Hufschuh durch folgende primären Eigenschaften aus:
- Verwendung eines expandierten, thermoplastischen Polyurethan oder thermoplastischen Polyacryl oder Polyolefin insbesondere in der Art eines Partikelschaums,
- Niedriges E-Modul des Rohstoffs und somit weiches Material,
- Sehr hohe Zähigkeit,
- Sehr hohe Rückstellkraft,
- Annähernd vollständige Rückstellung einer erfahrenen Kompression über einen definierten Zeitraum,
- Unterstützung des Strahls zur Vermeidung von klassischen Huftierkrankheiten,
- Kein Auslaufen eines Gels oder einer stabilisierenden Flüssigkeit,
- Hemmung der Rotation von Hufschuhen am Huf,
- Möglichkeit der Erzeugung von 3D-Geometrien, insbesondere zur zusätzlichen Unterstützung des Strahls als therapeutische Einlage,
- Hohe chemische Beständigkeit gegen in der Tierhaltung übliche Medien,
- Förderung der Durchblutung des Hufes durch nichtstarre Druckfläche,
- Möglichkeit der Einfärbung der Einlage,
- Möglichkeit die Einlage durch eine Vorfixierung am Huf zu halten, ggf. ohne zusätzliche Haltebänder oder Schnallen,
- Durch die Dämpfung auch ein Schutz des Reiters vor Schwindungen verursacht durch Hufeisen und anderer hochmodulige Stoffe,
- Schutz vor Arthrose an dem Gelenkapparat der Tiere.

Im Folgenden wird eine Ausführungsform der Erfindung anhand von Zeichnungen näher beschrieben.

Es zeigen
- Figur 1: die erfindungsgemäße Vorrichtung in einer Ausführung als Hufschuh ohne Befestigungsbänder 5, 6;
- Figur 2: einen Tierhuf 4 in dem erfindungsgemäßen Hufschuh;
- Figur 3: den erfindungsgemäßen Hufschuh mit daran angeordneten Befestigungsmitteln 5, 6;
- Figur 4: einen Tierhuf 4 mit in den Hufschuh eingestellten Huf, der mit Befestigungsbändern 5, 6 am Tierhuf 4 befestigt ist sowie
- Figur 5: eine vereinfachte geschnittene Ansicht eines Befestigungsriemens 6 anliegend an einem Tierhuf 4 mit Polstern 10.

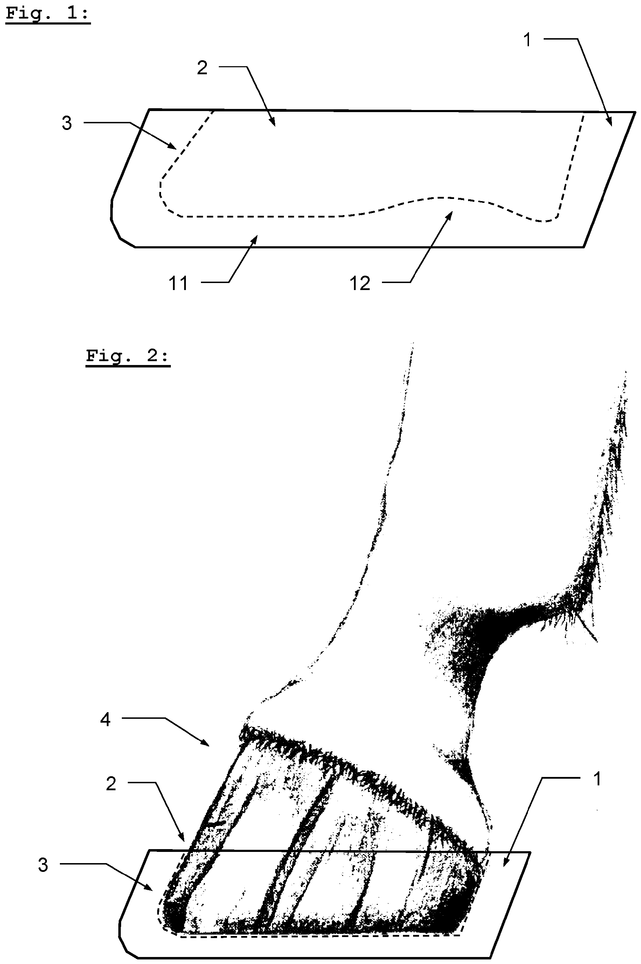

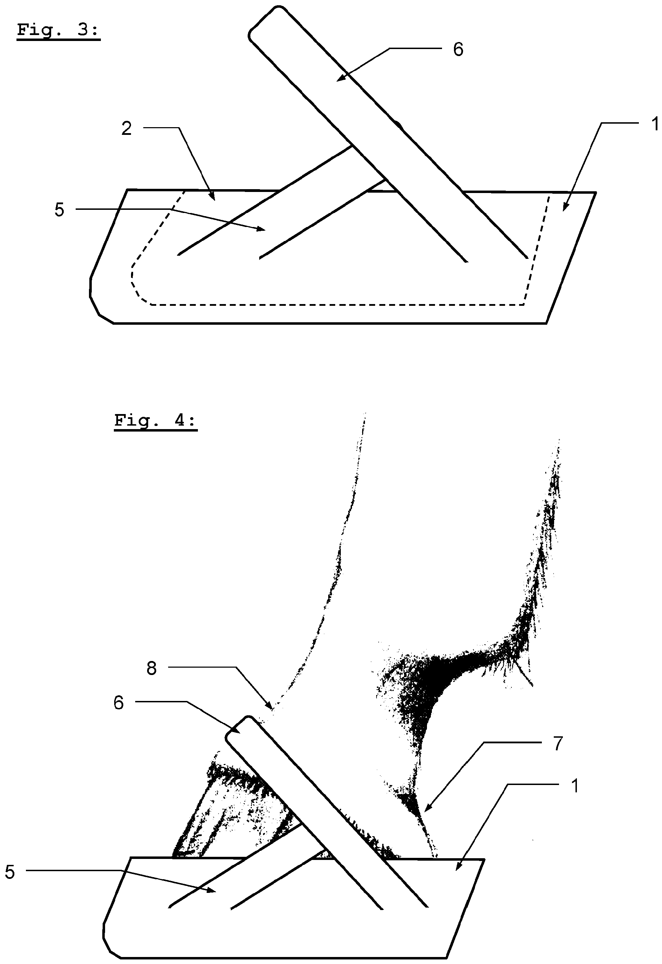

In den vorliegenden Zeichnungen wird in vereinfachter Darstellung eine Bauform der Erfindung in Form eines Hufschuhs dargestellt, der auf der Basis eines Kunststoffkissens 1 entsprechend dem in den Ansprüchen aufgezeigten Merkmalen aufgebaut ist. Die Figuren 1 und 3 zeigen hierbei jeweils einen Hufschuh, wobei dieser in Figur 1 ohne und in Figur 3 mit Befestigungsmitteln 5 und 6 dargestellt ist. In beiden Figuren ist erkennbar, dass der Hufschuh derart einteilig ausgebildet ist, dass er den Huf teilweise umschließend ausgebildet ist, wobei der Hufschuh einen von einer Bodenplatte 11 ausgehenden umlaufenden Rand 3 aufweist, der als Schaft einen Innenraum 2 umschließt.

Dieser den Schaft ausbildende Rand 3 ist hierbei in dieser Bauform nicht mit einer durchgängig gleichmäßigen Materialstärke ausgebildet sondern zur Öffnung des Hufschuhs sich aufweitend ausgebildet. Dies ist eine gezielte Maßnahme um zu erreichen, dass durch die Elastizität des Kunststoffkissens 1 der Hufschuh über den Tierhuf 4 gestülpt werden kann. Gleichzeitig ist durch die Aufweitung der Materialstärke des Randes 3 hin zur oberen Öffnung zum einen der Innenraum 2 dem konischen Verlauf des Hufes folgend ausgeformt und zum anderen durch diese Aufweitung auch ein bereits erstes stabilisierendes Element für einen sicheren Halt am Pferdehuf gegeben ist.

Das heißt, die Aufweitung des Randes zum oberen offenen Bereich des Hufschuhs hin bewirkt, dass hier das Material beim Einsetzen des Hufes aufgedehnt und durch den eingesetzten Huf komprimiert wird und somit ein Herausgleiten des Hufes aus dem erfindungsgemäßen Hufschuh verhindert.

Figur 2 zeigt nun auch einen in diesen ersten Hufschuh eingesetzten Tierhuf 4. Hierbei ist erkennbar, dass der Huf in die Öffnung 2 im Hufschuh 1 eingeführt worden ist und der umlaufende Rand 3 den Huf in dieser beispielhaften Darstellung in etwa zur Hälfte überragt und so dem Hufschuh bereits eine Grundstabilität in der Befestigung am Huf gibt.

Es ist hierbei zu berücksichtigen, dass sowohl die Materialstärken der dargestellten Hufschuhabbildung in Bezug auf die Größendarstellung des Hufes lediglich beispielhaft und in keinem Fall die Erfindung bestimmend oder einschränkend zu bewerten sind. Insbesondere die Dicke der Bodenplatte 11 des den Hufschuh 1 bildenden Kunststoffkissens 1 kann auch deutlich stärker ausgebildet sein und wird hierbei in Abhängigkeit vom Gewicht des durch den Hufschuh zu stützenden Tieres mit bestimmt.

Figur 3 zeigt nun Befestigungsmittel 5 und 6, die in diesem Fall riemenartig ausgebildet und außenseitig am Hufschuh angeordnet sind. Dies ist lediglich eine beispielhafte Anordnung, da beispielsweise diese Befestigungsmittel 5, 6 auch den Hufschuh umschließend oder nur an dessen Oberkante ansetzend verlaufen können.

Relevant hierbei ist allerdings, dass diese Befestigungsmittel in einem geringen Maße am Tierfuß angreifend angeordnet sind. In der dargestellten Bauform befinden sich hier riemenartige Befestigungsmittel 5 und 6 in Kombination, da das eigentliche, den Tierfuß überspannende riemenartige Befestigungsmittel 6 durch quer zu diesem verlaufende Befestigungsmittel 5 mit dem vorderen Bereich des Hufschuhs verspannt sind, um so einen gleichmäßigen Andruck des Hufschuhs an den Tierhuf zu gewährleisten und die Befestigungsmittel 5 und 6 gegenseitig zu stabilisieren.

Der Blick auf die Anbringung des Hufschuhs am Tierfuß in der Figur 4 macht hierbei deutlich, dass die an der Rückseite des Hufes am Tierfuß verlaufende Beugesehne 7 von der Befestigung des Hufschuhs vollständig ausgenommen ist. Dies ist sehr vorteilhaft, da so eine Reizung dieser Sehne bei der Kippbewegung des Tierfußes durch die eventuell diese überspannenden Befestigungsmittel 5 oder 6 sicher ausgeschlossen werden kann.

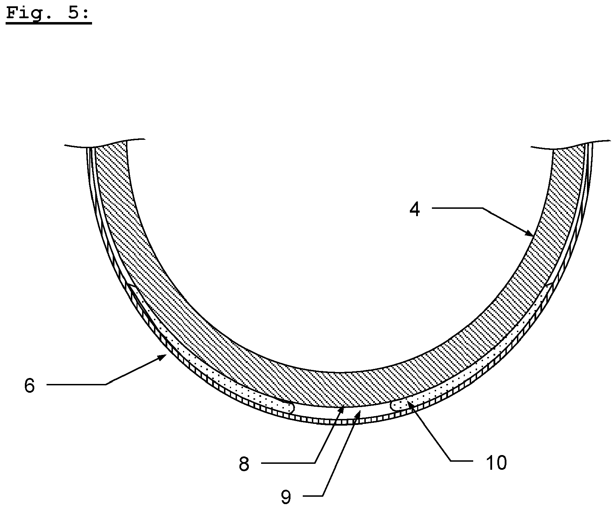

Es erfolgt lediglich eine Überspannung der Fessel im vorderen Bereich des Beines, wobei auch hier eine Reizung der hier verlaufenden Strecksehne 8 erfindungsgemäß vermieden wird, was in der folgenden Figur 5 näher erläutert ist.

Figur 5 zeigt nochmals das die Fessel des Tierbeines überspannende riemenartige Befestigungsmittel 6, wobei hier erkennbar ist, das in einer vorteilhaften Bauform der Erfindung innenseitig am riemenartigen Befestigungsmittel 6 Polsterungen 10 vorgesehen sind, die vom Huf ausgehend bis etwa zur Fessel verlaufen. Ziel dieser zusätzlichen Polsterungen 10 ist zum einen die eigentliche Polsterung selbst und somit ein sanfteres Anliegen an der Fessel. Zudem wird aber auch erfindungsgemäß bewirkt, dass diese Polsterung einen Abstand zwischen dem riemenartigen Befestigungsmittel 6 und dem Tierhuf 4 im Bereich der Strecksehe 8 an der vorderen Seite des Tierbeines bewirkt. Der hier schematisch dargestellte Freiraum 9 wird hierbei dadurch erzeugt, dass die beidseitigen Polsterungen 10 nur bis zu einem Bereich am riemenartigen Befestigungsmittel 6 angeordnet sind, der an den Verlauf der Strecksehne 8 an der Fessel angrenzt und hier eine Lücke frei lassen. Das heißt, der Bereich in dem die Strecksehne die Fessel in etwa vertikal überspannt wird durch diese Polsterungen ausgenommen, so dass hier ein Bereich entsteht, in dem ein geringerer oder kein Andruck des riemenartigen Befestigungsmittel 6 auf die Fessel des Tieres erfolgt.

Grundsätzlich sei noch einmal festgestellt, dass es hier um beispielhafte Ausführungsformen in vereinfachter Darstellung handelt und somit die Abmaße für die Erfindung nur beispielhaft zu verstehen sind.

## Patentansprüche

1. Hufschuh oder Hufschuheinlage zur druckdämpfenden Abstützung des Fußes (4) eines Huftieres, insbesondere eines Pferdes, auf einem harten Untergrund, zumindest umfassend ein geschäumtes Kunststoffkissen (1), das dazu konfiguriert ist, zwischen dem Huf des Tieres (4) und dem Untergrund angeordnet zu werden, **dadurch gekennzeichnet, dass**
- das Kunststoffkissen (1) aus einem geschlossenzelligen Kunststoffschaum mit einer thermoplastischen oder elastomeren Matrix einer Dichte zwischen 100 und 400 g/l gebildet ist,
- wobei das Kunststoffkissen (1) bei 50%iger Kompression eine Druckspannung von 150 - 280 kPa aufweist.

2. Hufschuh oder Hufschuheinlage nach Anspruch 1,
**dadurch gekennzeichnet, dass**
der geschlossenzellige Kunststoffschaum als Partikelschaum mit Perlengrößen von 1,5 mm bis 10 mm ausgebildet ist.

3. Hufschuh oder Hufschuheinlage nach Anspruch 1 oder 2,
**dadurch gekennzeichnet, dass**
das Kunststoffkissen (1) multikompressionsfähig ausgebildet eine spontane Rückstellung aus einer 50%igen Kompression zumindest auf 95 % der Ausgangsstärke aufweist.

4. Hufschuh oder Hufschuheinlage nach einem der Ansprüche 1 bis 3,
**dadurch gekennzeichnet, dass**
das Kunststoffkissen (1) eine Rückstellung in eine entspannte, annähernd vollständige Ausgangsstärke aus einer 50%igen Kompression nach 30 bis 75 Minuten erreicht.

5. Hufschuh oder Hufschuheinlage nach einem der vorangegangenen Ansprüche,
**dadurch gekennzeichnet, dass**
das Kunststoffkissen (1) aus einem expandierten, thermoplastischen Polyurethan, Polyacryl oder Polyolefin besteht.

6. Hufschuh oder Hufschuheinlage nach einem der vorangegangenen Ansprüche,
**dadurch gekennzeichnet, dass**
der Werkstoff des Kunststoffkissens (1) bei 20°C ein niedriges Elastizitätsmodul von 1 bis 100 MPa aufweist.

7. Hufschuh oder Hufschuheinlage nach einem der vorangegangenen Ansprüche,
**dadurch gekennzeichnet, dass**
das Kunststoffkissen (1) zur verstärkten Abstützung des Strahls im Tierhuf (4) im Mittelbereich erhöht ausgebildet ist.

8. Hufschuh oder Hufschuheinlage nach Anspruch 7,
**dadurch gekennzeichnet, dass**
die Erhebung (12) im Mittelbereich des Kunststoffkissens (1) rotationshemmend in den Huf sich anformend ausgebildet ist.

9. Hufschuh oder Hufschuheinlage nach einem der vorangegangenen Ansprüche,
**dadurch gekennzeichnet, dass**
- das Kunststoffkissen (1) in seiner Außenkontur dem Huf nachgeformt aber größer als die Huffläche ausgebildet ist,
- wodurch bei Kompression des Kunststoffkissens (1) ein den Huf an dessen Außenkante umschließender hochstehend ringförmiger Rand ausgebildet ist.

10. Hufschuh oder Hufschuheinlage nach einem der vorangegangenen Ansprüche,
**dadurch gekennzeichnet, dass**
das Kunststoffkissen (1) einen den Huf an dessen Hufwand zumindest abschnittsweise umschließenden hochstehend ringförmiger Rand (3) aufweist.

11. Hufschuh oder Hufschuheinlage nach Anspruch 10,
**dadurch gekennzeichnet, dass**
- der die Hufwand umschließende Rand (3) des Kunststoffkissens (1) zumindest abschnittsweise zum vom Rand (3) umschlossenen Innenraum (2) hin geneigt verläuft sowie die Wandstärke des Randes zumindest teilweise von der Bodenplatte (11) ausgehend sich aufweitet,
- wodurch sich ein durch den ringförmigen Rand (3) ausgebildeter Schaft zu dessen oberer Aufnahmeöffnung hin verjüngt.

12. Hufschuh oder Hufschuheinlage nach Anspruch 11,
**dadurch gekennzeichnet, dass**
diese Verjüngung an der Vorderseite des Hufschuhs stärker ausgebildet ist und somit der Rand (3) in diesem vorderen Abschnitt stärker nach Innen geneigt verläuft.

13. Hufschuh oder Hufschuheinlage nach einem der vorangegangenen Ansprüche,
**dadurch gekennzeichnet, dass**
am Kunststoffkissen (1) Befestigungsmittel (5, 6) zur lösbaren Befestigung am Tierhuf (4) angeordnet sind.

14. Hufschuh oder Hufschuheinlage nach Anspruch 13,
**dadurch gekennzeichnet, dass**
- die Befestigungsmittel vom hinteren Bereich des Kunststoffkissens (1) ausgehend den vorderen Bereich des Hufes oder der Fessel (4) überspannend angeordnet sind,
- wobei die Hufrückseite von Befestigungsmitteln frei verbleibt.

15. Hufschuh oder Hufschuheinlage nach Anspruch 13 oder 14,
**dadurch gekennzeichnet, dass**
am Kunststoffkissen (1) als Befestigungsmittel (5, 6) zumindest ein Klettverschluss zur lösbaren Befestigung am Pferdehuf angeordnet ist.

16. Hufschuh oder Hufschuheinlage nach Anspruch 13 oder 14,
**dadurch gekennzeichnet, dass**
an dem den Tierhuf überspannenden Befestigungsmittel (6) innenseitige Polsterungen (10) derart angeordnet sind, dass ein kompressionsreduzierter Freiraum (9) über der Strecksehne (8) am Tierhuf (4) verbleibt.

17. Hufschuh oder Hufschuheinlage nach einem der vorangegangenen Ansprüche 1 bis 8,
**dadurch gekennzeichnet, dass**
das Kunststoffkissen (1) in einem Hufschuh umfassend Befestigungsmittel (5, 6) zur lösbaren Befestigung am Tierhuf angeordnet ist.

18. Hufschuh oder Hufschuheinlage nach einem der vorangegangenen Ansprüche,
**dadurch gekennzeichnet, dass**
zumindest druckempfindliche Sensorelemente am oder im Kunststoffkissen (1) angeordnet sind zur Erfassung der Krafteinleitung und Druckverteilung durch den und auf den Huf.

19. Hufschuh oder Hufschuheinlage nach Anspruch 18,
**dadurch gekennzeichnet, dass**
elektronische Komponenten zur drahtlosen Kommunikation und Auswertung der durch die druckempfindlichen Sensorelementen erfassten Messwerte der Krafteinleitung und Druckverteilung am oder im Kunststoffkissen (1) angeordnet und mit den Sensorelementen verbunden sind.

## Claims

1. Hoof shoe or hoof shoe insert for relieving the pressure on the foot (4) of a hoofed animal, in particular a horse, on a hard underlying surface, at least comprising a foamed plastics cushion (1), which is configured to be arranged between the hoof of the animal (4) and the underlying surface,
**characterized in that**
- the plastics cushion (1) is formed from a closed-cell plastics foam having a thermoplastic or elastomeric matrix with a density between 100 and 400 g/l,
- wherein the plastics cushion (1) has a compressive stress of 150 - 280 kPa at 50% compression.

2. Hoof shoe or hoof shoe insert according to Claim 1,
**characterized in that**
the closed-cell plastics foam is in the form of particle foam with bead sizes of 1.5 mm to 10 mm.

3. Hoof shoe or hoof shoe insert according to Claim 1 or 2,
**characterized in that**
the plastics cushion (1) is designed to be multi-compressible and spontaneously returns from 50% compression to at least 95% of the initial thickness.

4. Hoof shoe or hoof shoe insert according to one of Claims 1 to 3,
**characterized in that**
the plastics cushion (1) returns to an expanded, approximately full initial thickness from 50% compression after 30 to 75 minutes.

5. Hoof shoe or hoof shoe insert according to one of the preceding claims,
**characterized in that**
the plastics cushion (1) consists of an expanded, thermoplastic polyurethane, polyacrylic or polyolefin.

6. Hoof shoe or hoof shoe insert according to one of the preceding claims,
**characterized in that**
the material of the plastics cushion (1) has a low modulus of elasticity of 1 to 100 MPa at 20°C.

7. Hoof shoe or hoof shoe insert according to one of the preceding claims,
**characterized in that**
the plastics cushion (1) has an elevated design in the central region to provide increased support for the frog in the animal's hoof (4).

8. Hoof shoe or hoof shoe insert according to Claim 7,
**characterized in that**
the elevation (12) in the central region of the plastics cushion (1) is designed to inhibit rotation by moulding itself onto the hoof.

9. Hoof shoe or hoof shoe insert according to one of the preceding claims,
**characterized in that**
- the plastics cushion (1) is designed such that its outer contour follows the hoof but is larger than the hoof surface,
- as a result of which, when the plastics cushion (1) is being compressed, a raised annular rim surrounding the hoof at its outer edge is formed.

10. Hoof shoe or hoof shoe insert according to one of the preceding claims,
**characterized in that**
the plastics cushion (1) has a raised annular rim (3) surrounding the hoof at the hoof wall thereof at least in certain portions.

11. Hoof shoe or hoof shoe insert according to Claim 10,
**characterized in that**
- the rim (3) of the plastics cushion (1) that surrounds the hoof wall is inclined towards the inner space (2) surrounded by the rim (3) at least in certain portions, and the wall thickness of the rim at least partially widens starting from the base plate (11),
- as a result of which a shaft formed by the annular rim (3) tapers towards the upper receiving opening thereof.

12. Hoof shoe or hoof shoe insert according to Claim 11,
**characterized in that**
this taper is greater at the front side of the hoof shoe, and the rim (3) is thus inclined inwards to a greater extent in this front portion.

13. Hoof shoe or hoof shoe insert according to one of the preceding claims,
**characterized in that**
fastening means (5, 6) for releasable fastening to the animal's hoof (4) are arranged on the plastics cushion (1).

14. Hoof shoe or hoof shoe insert according to Claim 13,
**characterized in that**
- the fastening means are arranged so as to span the front region of the hoof or the pastern (4), starting from the rear region of the plastics cushion (1),
- wherein the rear side of the hoof remains free from fastening means.

15. Hoof shoe or hoof shoe according to Claim 13 or 14,
**characterized in that**
at least one hook-and-loop closure for releasable fastening to the horse's hoof is arranged on the plastics cushion (1) as fastening means (5, 6).

16. Hoof shoe or hoof shoe insert according to Claim 13 or 14,
**characterized in that**
padding elements (10) are arranged on the inner side of the fastening means (6) spanning the animal's hoof in such a way that a compression-reduced free space (9) remains above the extensor tendon (8) on the animal's hoof (4).

17. Hoof shoe or hoof shoe insert according to one of the preceding Claims 1 to 8,
**characterized in that**
the plastics cushion (1) is arranged in a hoof shoe comprising fastening means (5, 6) for releasable fastening to the animal's hoof.

18. Hoof shoe or hoof shoe insert according to one of the preceding claims,
**characterized in that**
at least pressure-sensitive sensor elements are arranged on or in the plastics cushion (1) to detect the introduction of force and distribution of pressure through and onto the hoof.

19. Hoof shoe or hoof shoe insert according to Claim 18,
**characterized in that**
electronic components for wireless communication and evaluation of the measured force-introduction and pressure-distribution values detected by the pressure-sensitive sensor elements are arranged on or in the plastics cushion (1) and connected to the sensor elements.

## Revendications

1. Chaussure de sabot ou insert de chaussure de sabot pour le soutien amortissant la pression du pied (4) d'un animal ongulé, notamment d'un cheval, sur une surface dure, comprenant au moins un coussinet en matière plastique moussée (1), qui est configuré pour être agencé entre le sabot de l'animal (4) et la surface,
**caractérisé en ce que**
- le coussinet en matière plastique (1) est formé d'une mousse en matière plastique à cellules fermées comprenant une matrice thermoplastique ou élastomère d'une densité comprise entre 100 et 400 g/l,
- le coussinet en matière plastique (1) présentant à une compression de 50 % une contrainte de compression de 150 à 280 kPa.

2. Chaussure de sabot ou insert de chaussure de sabot selon la revendication 1, **caractérisé en ce que** la mousse en matière plastique à cellules fermées est réalisée sous forme de mousse particulaire ayant des tailles de perles de 1,5 mm à 10 mm.

3. Chaussure de sabot ou insert de chaussure de sabot selon la revendication 1 ou 2, **caractérisé en ce que** le coussinet en matière plastique (1) est réalisé sous forme multicompressive et présente une réinitialisation spontanée à partir d'une compression de 50 % à au moins 95 % de l'épaisseur initiale.

4. Chaussure de sabot ou insert de chaussure de sabot selon l'une quelconque des revendications 1 à 3, **caractérisé en ce que** le coussinet en matière plastique (1) atteint une réinitialisation à une épaisseur initiale détendue, presque complète, à partir d'une compression de 50 % après 30 à 75 minutes.

5. Chaussure de sabot ou insert de chaussure de sabot selon l'une quelconque des revendications précédentes, **caractérisé en ce que** le coussinet en matière plastique (1) est constitué d'un polyuréthane thermoplastique expansé, de polyacrylique ou de polyoléfine.

6. Chaussure de sabot ou insert de chaussure de sabot selon l'une quelconque des revendications précédentes, **caractérisé en ce que** le matériau du coussinet en matière plastique (1) présente un module d'élasticité faible de 1 à 100 MPa à 20 °C.

7. Chaussure de sabot ou insert de chaussure de sabot selon l'une quelconque des revendications précédentes, **caractérisé en ce que** le coussinet en matière plastique (1) est réalisé sous forme surélevée dans la zone centrale pour un soutien renforcé de la fourchette dans le sabot de l'animal (4).

8. Chaussure de sabot ou insert de chaussure de sabot selon la revendication 7, **caractérisé en ce que** la surélévation (12) dans la zone centrale du coussinet en matière plastique (1) est réalisée de manière à empêcher la rotation en se conformant dans le sabot.

9. Chaussure de sabot ou insert de chaussure de sabot selon l'une quelconque des revendications précédentes, **caractérisé en ce que**
- le coussinet en matière plastique (1) est réalisé dans son contour extérieur en copiant le sabot mais plus grand que la surface du sabot,
- ainsi, lors d'une compression du coussinet en matière plastique (1), un rebord annulaire dressé à la verticale entourant le sabot au niveau de son bord extérieur est formé.

10. Chaussure de sabot ou insert de chaussure de sabot selon l'une quelconque des revendications précédentes, **caractérisé en ce que** le coussinet en matière plastique (1) présente un rebord annulaire dressé à la verticale (3) entourant au moins par sections le sabot au niveau de sa paroi de sabot.

11. Chaussure de sabot ou insert de chaussure de sabot selon la revendication 10, **caractérisé en ce que**
- le rebord (3) du coussinet en matière plastique (1) entourant la paroi de sabot est incliné au moins par sections vers l'espace intérieur (2) entouré par le rebord (3), et l'épaisseur de paroi du rebord s'élargit au moins en partie à partir de la plaque de fond (11),
- ainsi, un manchon réalisé par le rebord annulaire (3) se rétrécit vers son ouverture de réception supérieure.

12. Chaussure de sabot ou insert de chaussure de sabot selon la revendication 11, **caractérisé en ce que** ce rétrécissement est réalisé de manière plus prononcée sur le côté avant de la chaussure de sabot et le rebord (3) est donc incliné vers l'intérieur de manière plus prononcée dans cette section avant.

13. Chaussure de sabot ou insert de chaussure de sabot selon l'une quelconque des revendications précédentes, **caractérisé en ce que** des moyens de fixation (5, 6) sont agencés sur le coussinet en matière plastique (1) pour une fixation détachable au sabot de l'animal (4).

14. Chaussure de sabot ou insert de chaussure de sabot selon la revendication 13, **caractérisé en ce que**
- les moyens de fixation sont agencés en partant de la zone arrière du coussinet en matière plastique (1) et en recouvrant la zone avant du sabot ou du paturon (4),
- le côté arrière du sabot restant exempt de moyens de fixation.

15. Chaussure de sabot ou insert de chaussure de sabot selon la revendication 13 ou 14, **caractérisé en ce qu'**au moins une fermeture agrippante est agencée sur le coussinet en matière plastique (1) en tant que moyen de fixation (5, 6) pour une fixation détachable au sabot du cheval.

16. Chaussure de sabot ou insert de chaussure de sabot selon la revendication 13 ou 14, **caractérisé en ce que** des rembourrages intérieurs (10) sont agencés sur le moyen de fixation (6) recouvrant le sabot de l'animal de telle sorte qu'il reste un espace libre (9) à compression réduite au-dessus du tendon extenseur (8) sur le sabot de l'animal (4).

17. Chaussure de sabot ou insert de chaussure de sabot selon l'une quelconque des revendications 1 à 8 précédentes, **caractérisé en ce que** le coussinet en matière plastique (1) est agencé dans une chaussure de sabot comprenant des moyens de fixation (5, 6) pour une fixation détachable au sabot de l'animal.

18. Chaussure de sabot ou insert de chaussure de sabot selon l'une quelconque des revendications précédentes, **caractérisé en ce qu'**au moins des éléments de détection sensibles à la pression sont agencés sur ou dans le coussinet en matière plastique (1) pour détecter l'introduction de force et la répartition de pression à travers et sur le sabot.

19. Chaussure de sabot ou insert de chaussure de sabot selon la revendication 18, **caractérisé en ce que** des composants électroniques pour la communication sans fil et l'évaluation des valeurs de mesure de l'introduction de force et de la répartition de pression détectées par les éléments de détection sensibles à la pression sont agencés sur ou dans le coussin en matière plastique (1) et reliés aux éléments de détection.
